# EUROPEAN PATENT APPLICATION

(11) **EP 4 604 341 A1**
(43) Date of publication of application: **20.08.2025**
(21) Application number: 24157942.4
(22) Date of filing: 15.02.2024
(51) Int. Cl.: H02G 11/02, B65H 75/44

(54) **CASING OF OR FOR AN ELECTRONIC DEVICE AND USE OF THE CASING FOR ELECTRONIC DEVICES**

(71) Applicant: Sandot, Ludovic, 1621BR Hoorn (NL)
(72) Inventor: Sandot, Ludovic, 1621BR Hoorn (NL)
(74) Representative: Walther Bayer Faber Patentanwälte PartGmbB

(57) **Abstract**

The present invention relates to a casing (241, 242, 243, 244, 245, 246) of or for an electronic device (10), the electronic device (10) comprising one or more cables (20) or being connectable hereto, wherein the casing (241, 242, 243, 244, 245, 246) forms a receiving portion (26) for receiving the electronic device (10), and a winding portion (28) for winding up the cable (20).

## Description

The present disclosure relates to a casing of or for an electronic device and to the use of such a casing for electronic devices. Electronic devices relevant within the present disclosure are in particular but not exclusively mobile phones, tablets, notebooks, displays and/or chargers which are typically connectable or connected to at least one cable. Such cables may be used for charging the battery of the electronic device and/or for transferring data between the electronic device and another electronic device such as a personal computer, a storage device or earplugs. Depending on the application, different cables with different plugs may be connectable to the electronic device. When transporting the electronic device, it is often necessary or at least desirable to also carry the cables. The cables may be quite lengthy, i.e., up to 50 cm or more. Thus, the storage of the cables during the transport causes certain obstacles. Often, the cable is wound around the electronic device which on the one hand causes a disadvantageous appearance and on the other hand may lead to cable damage when the cable is wound up in a too small radius. Further, the cables may slip from the electronic device and consequently unwind.

Cable spools for cables of electronic devices are e.g., disclosed in CA 2 919 095 A1, CA 2 916 270 A1 and GB 2 342 085 A. However, such cable spools are separate parts and may thus get lost when not in use. WO 2012/022961 A1 shows a cable tidy that can be fastened to an electronic device, however, the construction of that cable tidy is fairly complex and thus relatively expensive.

It is thus one object of one embodiment of the present invention to provide a solution by which the drawbacks mentioned above can be reduced. In particular, the solution should be simple in the manufacture, robust and easy to handle. A further objective of another embodiment of the present invention is to provide a use of a casing for electronic devices such as mobile phones, tablets, notebooks displays and/or chargers.

The object is solved by the features specified in claim 1. Advantageous embodiments are the subject of the dependent claims.

According to an embodiment of the present invention a casing of or for an electronic device is proposed, the electronic device comprising one or more cables, wherein the casing forms a receiving portion for receiving the electronic device, and a winding portion for winding up the cable. The casing according to the present invention has on the one hand a receiving portion in which the electronic device can be placed. Thus, the casing provides a certain shelter for the electronic device. On the other hand, the winding portion is fastened to the casing at a defined area. The receiving portion and the winding portion are arranged in a fixed relation to each other such that the casing can be made very compact and space-saving, thereby increasing the handling comfort. At the same time, the cable can be wound in a defined way that it does not get damaged and knotted.

In another embodiment the receiving portion and the winding portion are integral parts of the casing. It may be possible to provide the receiving portion and the winding portion as two or more separate parts and to releasably connect them to each other at a pre-defined connecting section. This way may impose the disadvantage that once disassembled, the receiving portion or the winding portion gets lost. Moreover, the connecting section may get damaged and thus the connection between the receiving portion and the winding portion may break. In contrast to that, in this embodiment, the casing is made in one piece. The connection between the receiving portion and the connecting portion is thus non-releasable and thus cannot break under normal operation conditions. Moreover, the casing may be made in one manufacturing step, in particular, by injection molding or by an additive manufacturing process. Thereby, the manufacturing can be facilitated, and the respective manufacturing costs kept low.

In a further embodiment the casing comprises a ground plate having a first surface and a second surface, wherein the first surface delimits the receiving portion and the second surface delimits the winding portion. The ground plate can be considered as a kind of delimitation wall that separates the receiving portion from the winding portion. The first surface and the second surface of the ground plate are located opposite from each other. Thus, the receiving portion is located on one side and the winding portion on another side of the ground plate such that the casing can be designed in a very space-saving and compact way.

A further embodiment the winding portion comprises at least one protrusion that starts from the second surface and around which the cable can be wound. A protrusion is a very simple way how to provide the winding portion. As it starts from the second surface of the ground plate, the casing can still be made in one piece.

In a further embodiment the protrusion comprises a first end and a second end, wherein the first end is connected to the ground plate and at the second end the protrusion comprises one or more lateral extensions, the lateral extension and the ground plate delimiting a receiving space for the winding portion. Although it may be sufficient to provide only a protrusion on the second surface of the casing to enable the winding of the cable, the lateral extension creates a receiving space in which the cable can be wound. Thus, the receiving space prevents the cable from slipping from the protrusion when wound up. Moreover, the way the cable is wound up can be defined up to a certain degree.

In another embodiment the lateral extensions run parallel to the ground plate. In this embodiment the height of the casing can be kept small as the lateral extensions do not or only slightly increase the height of the casing.

In a further embodiment the free ends of the lateral extensions coincide with the free ends of the ground plate. In this embodiment the lateral extensions do not protrude over the ground plate within or parallel to the plane defined by the ground plate. In this embodiment the casing has a balanced and symmetrical design and the receiving space provided by the lateral extensions is maximized. Thus, even longer cables may be wound up in the winding portion, at the same time the casing can still be designed in a compact way.

In another embodiment the lateral extensions are formed by a delimitation plate that is fastened to the protrusion. The delimitation plate may be permanently or releasably fastened to the protrusions. A permanent fastening may be obtained when the casing is made in one piece. A releasable fastening may be obtained when delimitation plate is fastened to the protrusions by screws or magnets or the like. The delimitation plate can be used for design purposes, e.g., can be provided with a sticker comprising patterns or the brand logo of an undertaking. The patterns may be a logo, a photo or a floral design. Thus, the delimitation plate can be used for marketing purposes.

According to another embodiment an indentation is formed on the second surface of the ground plate oriented towards the protrusions. The cable can be guided towards the protrusion by the indentation. At the same time, the section of the cable within the protrusion does not protrude the second surface. The remaining section of the cable can then be wound up within one plane such that the height of the receiving space may be reduced approximately to the diameter of the cable.

In a further embodiment the protrusion is formed by an elongate body having at least one curved guiding surface for guiding the cable upon winding. The curvature of the guiding surface can be chosen such that the cable is in an extensive contact with the protrusion which leads to a compact and proper winding of the cable. The guiding surface may follow the shape of a circle, an ellipse or the like. Often the electronic devices have at least approximately a rectangular shape. In case of an ellipse, the longer axis can be oriented parallel or approximately parallel to the longer extension of the electronic device such that the available space can be efficiently used.

According to another embodiment the casing comprises at least one holding section for releasably fixing the end of the cable to the casing. Fixing the ends of the cable to the casing prevents an uncontrolled unwinding of cable from the casing. Usually, plugs are arranged at the end of the cable. The plugs are typically larger than the cable. Thus, one way to fix the ends of the cable could be to provide brackets or latches into which the cable as such or the plugs can be pressed.

In accordance with a further embodiment the holding section is formed by a recess or a protrusion of the delimitation plate and/or of the ground plate. As mentioned, plugs are typically provided at the end of the cables. The recesses or protrusions can be designed such that they interact with the plugs by a positive locking. The user only has to press the plugs into the holding section which then act like a latching element. To withdraw the plugs from the holding section, the user only has to pull them slightly.

In another embodiment the casing comprises at least one further winding portion. The further winding portion may be of the same construction as the primary winding portion. In particular when the electronic device and thus the casing is small and the cable to be wound is long, the primary winding portion may be too small to fully wind up the cable herein. The part of the cable protruding the primary winding portion can then be wind up on the further winding portion.

A further embodiment the receiving portion comprises
- side walls emerging from the first surface of the ground plate for delimiting the receiving section and/or
- fastening sections for fixing the electronic device in the receiving section.

The side walls prevent the mobile device from slipping from the receiving section. At the same time, side walls are easy to manufacture and can add to the stability of the ground plate which can then in return be made thinner to safe material. The casing may be equipped with one coherent side wall or a number of separate side walls.

Alternatively or in addition to the side walls, the casing may be provided with fastening sections. The fastening sections may be embodied as latching elements or clamping elements by which the electronic device can be releasably fastened to the casing. An inadvertent separation of the electronic device from the casing can be avoided.

In a further embodiment the fastening sections are formed by the side walls. The integration of the fastening sections into the side walls adds to a compact and simple design of the casing and facilitates the manufacturing.

In another embodiment the ground plate and/or the side walls and/or the fastening sections comprise cut-outs for guiding the cable. The sockets of the electronic device by which the cable can be connected to the same may be located in different areas. Usually, the sockets are arranged on the lower lateral face of the electronic device but arrangements on the side faces are also possible. The cut-outs provide an access to the sockets when the electronic device is located in the receiving portion. Thus, the cable can be wound up in the winding portion without the need to remove the plug of the cable from the corresponding socket.

In a further embodiment the cut-outs form at least one through-hole inside the side walls and/or the ground plate. The distance of the cable between the socket and the receiving portion can be kept small. The bigger the portion of the cable inside the winding portion the lower the probability that the cable may get caught on objects in the surroundings of the casing.

A further embodiment the winding portion is formed by one or more recesses of the casing. The recess may be arranged at the side surfaces of the casing such that the height of the casing can be kept low. Moreover, this embodiment may be particularly suited for winding up long cables as the winding portion is arranged at the lateral outer end of the casing and thus comprises a long circumference.

In a further embodiment the casing comprises one or more adapting pieces for fixing the electronic device inside the receiving section. The outer dimensions of the electronic devices usually differ from type to type. To avoid that the electronic device may move within the receiving portion, the adapting pieces may be placed between the electronic device and the side walls or the fastening sections. Thus, the versatility of the casing can thus be improved as the same casing can be used to a large number of electronic devices. Only the adapting pieces have to be adjusted to the different types of electronic devices but not the entire casing.

Another aspect of the invention is directed to the use of the casing according to one of the preceding embodiments for electronic devices such as mobile phones, tablets, notebooks, displays and/or chargers. The technical effects and advantages as discussed with regard to the present method equally apply to the system. Briefly, the casing provides a certain shelter for the mobile phones, tablets, displays and/or chargers. At the same time the cable can be wound up in a defined way such that it does not get damaged or knotted.

Due to the fact that the electronic devices are received by the receiving portions, the design of the casing at least partially needs to be adjusted to the design of the electronic device. Insofar, some of the functions and technical effects mentioned above may be fulfilled by the design of the electronic device. In other words, by integrating the design of the casing into the design of the electronic device, some of the mentioned functions can be provided.

The present invention is described in detail with reference to the drawings attached wherein
- Figure 1: shows an electronic device, in this case a charger,
- Figure 2A: shows a first embodiment of a casing according to the present invention in a dismantled state,
- Figure 2B: shows the first embodiment of Figure 2A in a mounted state,
- Figure 2C: shows the first embodiment of the casing of Figure 2A in a mounted state with a cable wound up on it,
- Figure 3A: shows a second embodiment of a casing according to the present invention in a dismantled state in which a short portion of the cable is wound up on it,
- Figure 3B: shows the second embodiment of Figure 3A also in a dismantled state in which the cable is almost completely wound up on it, Figures 1 to 3B by means of principle perspective views,
- Figure 3C: shows the second embodiment of the casing in a mounted state by a first perspective view,
- Figure 3D: shows the second embodiment of the casing in a mounted state by a second perspective view,
- Figure 4: shows a third embodiment of the casing according to the present invention by means of a principle sectional view,
- Figure 5: shows a fourth embodiment of the casing according to the present invention by means of a principle sectional view,
- Figure 6: shows a fifth embodiment of the casing according to the present invention by means of a principle sectional view,
- Figure 7: shows a sixth embodiment of the casing according to the present invention by means of a principle sectional view,
- Figure 8A to 8D: a seventh embodiment of the casing according to the present invention by means of different views,
- Figure 9A to 9F: an eighth embodiment of the casing according to the present invention by means of different views, and
- Figure 10A to 10D: a nineth embodiment of the casing according to the present invention by means of different views.

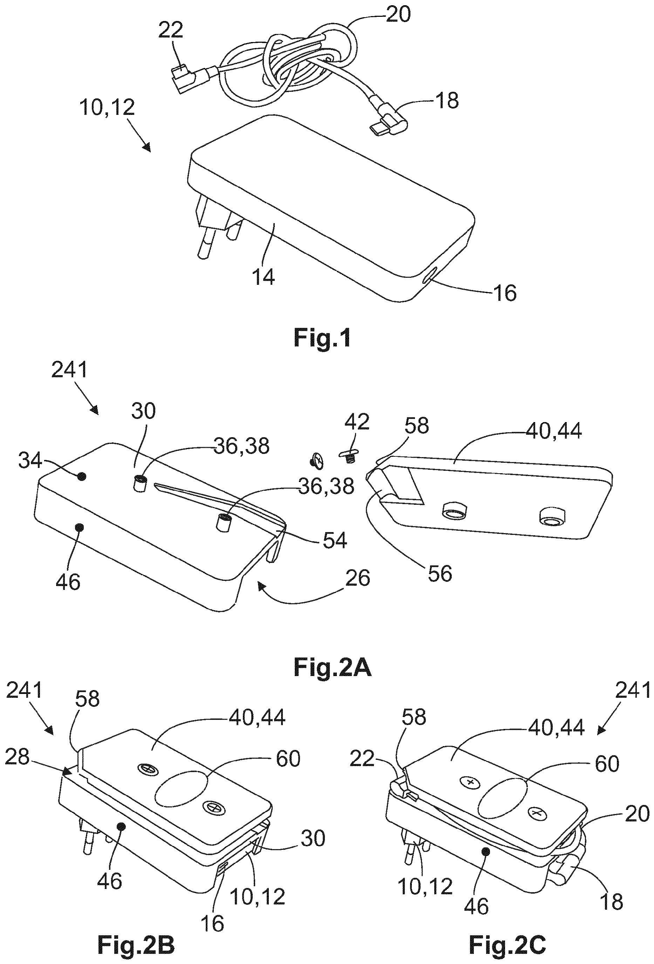

Figure 1 shows an electronic device 10, in this case, a charger 12, by means of a perspective view. The charger 12 comprises a plug that can be inserted into a plug socket (not shown) that is connected to an electrical grid, that provides electrical energy for example of 230 V at 50 Hz. The charger 12 comprises a housing 14 in which electronical components may be located that transform the voltage and/or the frequency such that other electronic devices 10 like smartphones or tablets can be charged. The charger 12 has a socket 16 into which a first plug 18 of a cable 20 can be inserted. The cable 20 further comprises a second plug 22 which can be inserted into a corresponding socket of an electronic component such as the smartphone or tablet.

The cable 20 can be fairly long, i.e., 50 cm or longer. When the charger 12 is not in use, one may try to coil the cable 20 as shown in Figure 1, the result of which may, however, be usually more or less chaotic. The coiled cable 20 may quickly uncoil. Moreover, there may be the risk that the cable 20 is coiled by a radius that is so small that the cable 20 is damaged.

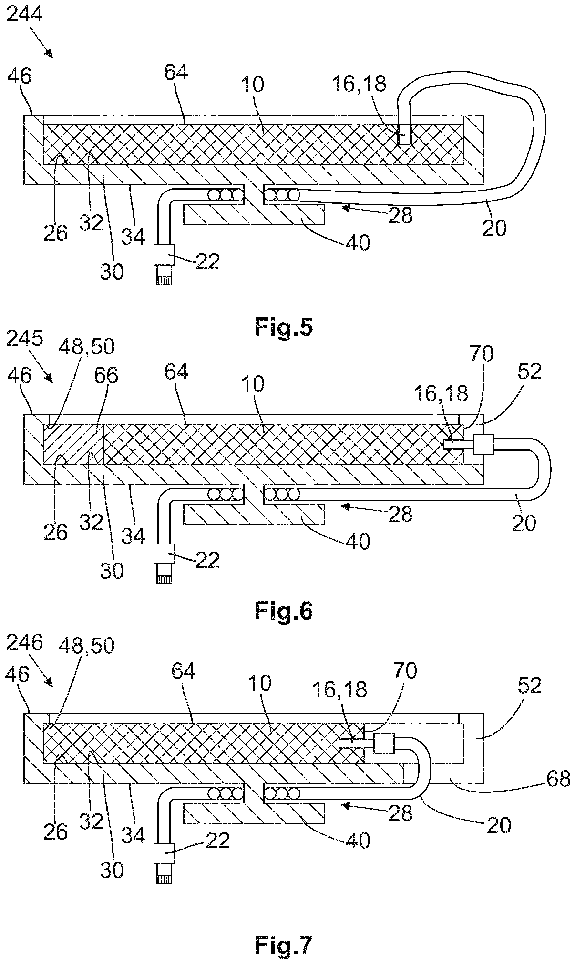

Figures 2A to 2C show a casing 241 of or for an electronic device 10 according to a first embodiment of the present invention. The casing 241 forms a receiving portion 26 for receiving the electronic device 10, and a winding portion 28 for winding up the cable 20. The casing 241 comprises a ground plate 30 with a first surface 32 and a second surface 34, wherein the first surface 32 delimits the receiving portion 26 and the second surface 34 delimits the winding portion 28. The first surface 32 is covered by the ground plate 30 in Figure 2A and thus not visible (see also Figures 5 to 7). Two rod-like protrusions 36 emanate from the second surface 34 and comprise a thread 38. A first end of the protrusions 36 coincide with the second surface 34 and a second end is located oppositely. Lateral extensions 40 can be fastened to the second end by screws 42 that are complementary to the threads 38. The lateral extensions 40 are formed by a delimitation plate 44 that delimit a receiving space of the winding portion 28. The delimitation plate 44 runs parallel to the ground plate 30 and has more or less the same dimension as the ground plate 30. In other words, the free lateral ends of the ground plate 30 and the delimitation plate 44 coincide with each other. The distance between the ground plate 30 and the delimitation plate 44 is determined by the height of the protrusions 36.

As also visible from Figure 2A, the casing 241 comprises side walls 46 that emerge from the first surface 32 of the ground plate 30 for delimiting the receiving portion 26. Further, the casing 241 is equipped with fastening sections 48 for fixing the electronic device 10 in the receiving portion 26 (see in particular Figures 6 to 7). The fastening sections 48 are formed by the side walls 46 and are embodied as projections 50 that are oriented to the center of the casing 241. As also seen in Figure 2A, the side walls 46 form a cut-out 52.

As shown in Figure 2A an indentation 54 is formed on the second surface 34 of the ground plate 30. The indentation 54 starts from a front face of the ground plate 30 and is oriented towards one of the protrusions 36, in this embodiment to the rear protrusion seen from the front face the indentation 54 starts from.

Figure 2B shows the casing 241 in its mounted state. The delimitation plate 44 is fixed to the protrusions 36 by the two screws 42. Moreover, the charger 12 is arranged inside the receiving portion 26 and fastened hereto. As mentioned, the charger 12 comprises the socket 16 into which the first plug 18 of the cable 20 can be inserted. However, in Figure 2B, no cable 20 is connected to the charger 12.

Figure 2C shows the casing 241 and the charger 12 from a similar perspective as Figure 2B, however, the first plug 18 of the cable 20 is introduced into the socket and the cable 20 is wound up inside the winding portion 28. Due to the arrangement of the socket 16 of the charger 12 and the design of the first plug 18 and the cut-out 52, a portion of the cable 20 adjacent to the first plug 18 is placed inside the indentation 54 and thus guided to the respective protrusion 36. The remaining portion of the cable 20 can be wound up around the two protrusions 36 in a plain above the portion placed inside the indentation 54. The free second plug 22 of the cable 20 can be positioned inside a holding section 56 formed by the delimitation plate 44 (see Figure 2A) to secure the second plug 22 and to avoid that the cable 20 unwinds itself. The holding section 56 may comprise latching means or the like to position and fix the second plug 22. For an easy withdrawal of the second plug 22 from the holding section 56 the delimitation plate 44 comprises a chamfering 58.

As visible from Figures 2B and 2C, the delimitation plate 44 can be used for design purposes, e.g., can be provided with a sticker comprising patterns 60 or the brand logo of an undertaking. Thus, the delimitation plate 44 can be used for marketing purposes.

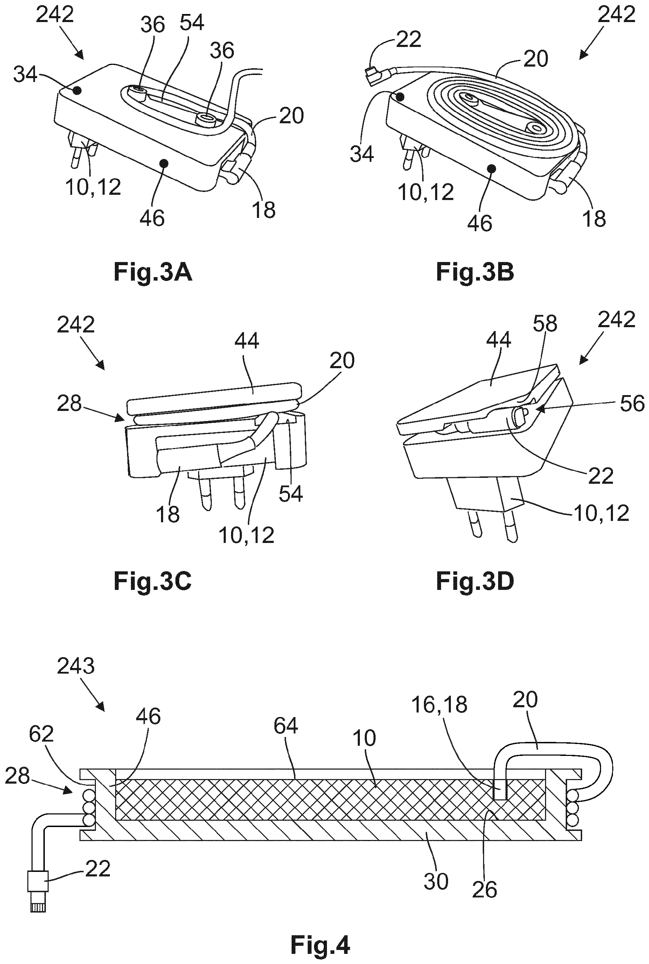

Figures 3A to 3D show a second embodiment of the casing 242 by four perspective views. The charger 12 is arranged inside the receiving portion 26. The basic design of the casing 242 according to the second embodiment is to a large extent similar to the one of the casing 241 according to the first embodiment, so only the main differences are described in the following.

The delimitation plate 44 of the casing 242 is connectable to the two protrusions 36 by means of magnets that are incorporated into the protrusions 36 and thus not visible in Figures 3A to 3D. The delimitation plate 44 can thus be separated from the ground plate 30 and fastened to the ground plate 30 without any tools. Whether or not appropriate, the cable 20 may first be wound up around the two protrusions 36 before the delimitation plate 44 is fastened to the protrusions 36. In particular in Figure 3A, one can see that the portion of the cable 20 adjacent to the first plug 18 is guided to the rear protrusion 36 by the indentation 54.

Figure 4 shows a third embodiment of the casing 243 according to the present invention. In this case the winding portion 28 is formed by recesses 62 of the casing 243. In particular, the side walls 46 take over the function of the two protrusions 36 of the first and second embodiment of the casing 241 with regard to the winding up of the cable 20. The recesses 62 fix the cables 20 inside the receiving portion 26. The cable 20 is wound around the side walls 46.

In Figure 4 the socket 16 of the electronic device 10 is arranged on its front face 64 which may be rather unusual but not impossible. The third embodiment of the casing 243 shows that the inventive principle is also applicable for such electronic devices 10.

Figure 5 shows a fourth embodiment of the casing 244 according to the present invention. The casing 244 is largely similar to the casing 241, 242 according to the first and second embodiments. However, the casing 244 according to the fourth embodiment is not equipped with a delimitation plate 44. The lateral extensions 40 may be rod-shaped. As an example, four rod-shaped lateral extensions 40 may be provided such that a cross-shape may be created when looking on the lateral extensions 40 in direction to the second surface 34. Other shapes like circles, ellipses or polygons are also possible. The lateral extensions 40 are relatively short and do not reach until the side walls 46. Also in the fourth embodiment of the casing 244, the socket of the electronic device 10 is located on its the front face 64. The casing 244 is made in one piece.

Figure 6 shows a fifth embodiment of the casing 245 according to the present invention. The casing 245 is to a large extent similar to the casing 244 according to the fourth embodiment. However, the socket 16 of the electronic device 10 shown in Figure 6 is arranged on the lateral surface. To gain access to the socket 16, the side wall comprises a cut-out 52. Moreover, the side wall 46 is equipped with the fastening sections 48 that are provided by projections 50 oriented towards the center of the casing 245. The side wall has a certain flexibility such that an electronic device 10 may be introduced into the receiving portion like a latching mechanism.

The electronic device 10 of Figure 6 is relatively short and does not extend from one end to the other end of the casing 245. To still employ the casing 245, adapting pieces 66 are used that bridge the distance between the electronic device 10 and one side wall.

Figure 7 shows a sixth embodiment of the casing 246 according to the present invention. The casing 246 according to the sixth embodiment is mostly similar to the casing 245 according to the fifth embodiment. The main difference is that the cut-out 52 is not only arranged in the side wall but extends to the ground plate 30 such that a through-hole 68 inside the ground plate 30 is formed. The length of the portion of the cable 20 arranged outside the winding portion 28 is thus shorter compared to the casing 245 of the fifth embodiment. Also in this case the adapting pieces 66 are used, which are, however not shown.

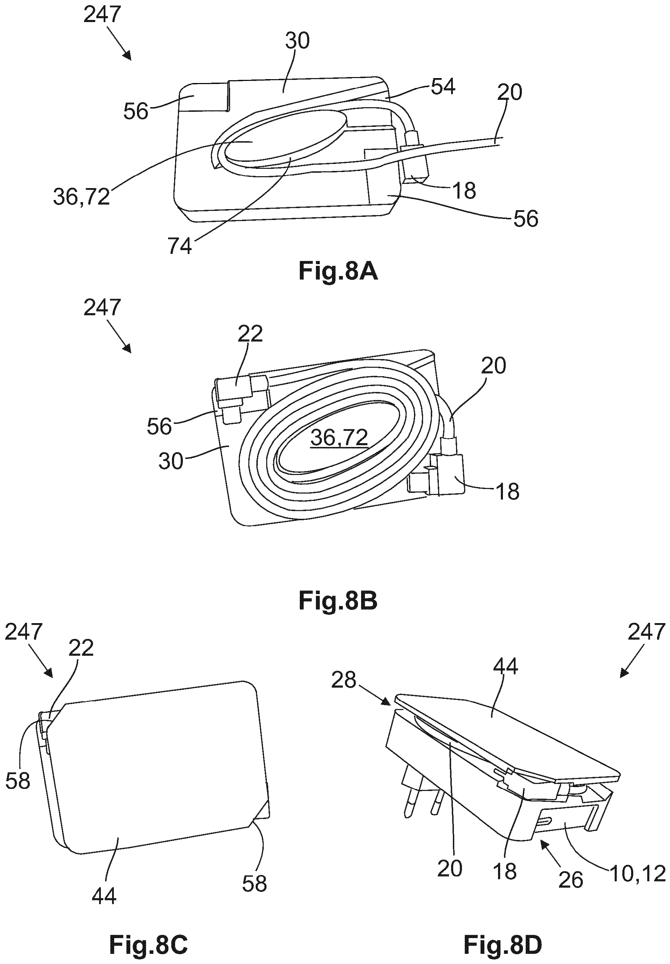

Figures 8A to 8D show a seventh embodiment of the casing 247 according to the present invention by perspective views. In Figures 8A and 8B the delimitation plate 44 is hidden for the sake of clarity. Figures 8C and 8D show the complete casing 247.

The basic design of the casing 247 according to the seventh embodiment is to a large extent similar to the one of the casing 241, 242 according to the first and second embodiment, so only the main differences are described in the following. In the first and the second embodiment of the casing 241, 242, two rod-like protrusions 36 are provided around which the cable 20 can be wound. In contrast to that, the casing 247 of the seventh embodiment only comprises one protrusion 36 which is formed by an elongate body 72. The elongate body 72 forms a curved guiding surface 74 for the cable 20. The curvature follows the shape of an ellipse. However, different shapes like a circle, semi-circle or semi-ellipse or combinations thereof including straight sections may also be conceivable.

Another difference between the casing 241, 242 according to the first and the second embodiment and the casing 247 of the seventh embodiment is that the latter comprises two holding sections 56 such that both ends of the cable 20 can be fixed to the casing 247 irrespective of the electronic device 10.

The remaining construction of the casing 247 of the seventh embodiment is to a large extent the same as the one of the casing 247 according to the first and the second embodiment.

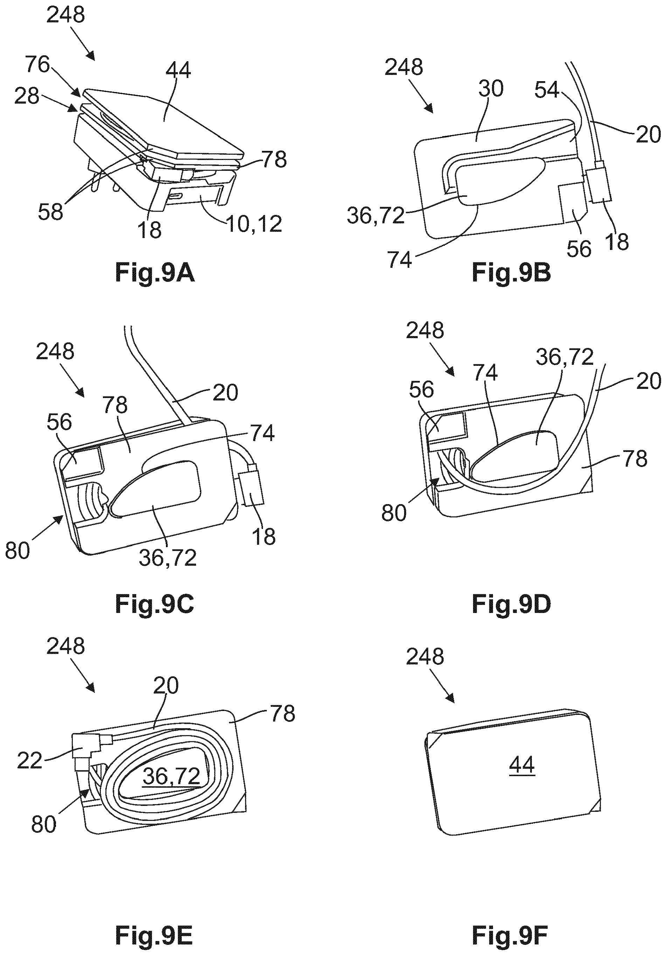

Figures 9A to 9F show an eighth embodiment of the casing 248 according to the present invention. Figures 9A and 9F show the complete casing 247 while in Figure 9B the ground plate 30 is visible.

The basic design of the casing 248 according to the eighth embodiment is to a large extent similar to the one of the casing 247 according to the seventh embodiment. In particular, the protrusion 36 is also formed by the elongate body 72, however, its curvature of the guiding surface 74 is different which can be seen e.g., in Figure 9B. It follows the approximate form of a quarter-ellipse, the edges of which are connected to each other by two straight sections that are perpendicular to each other.

Moreover, the casing 247 according to the eighth embodiment comprises two winding portions 28, 76, namely a lower winding portion 28 and a further winding portion 76 that is arranged on top of the lower winding portion 28. The lower winding portion 28 and the further winding portion 76 are separated by a separation plate 78 that can e.g., be seen in Figures 9C to 9E. The separation plate 78 forms a passageway 80 through which the cable 20 can be guided from the lower winding portion 28 to the further winding portion 76. The further winding portion 76 is limited by the delimitation plate 44 (See Figures 9A and 9F).

The casing 248 according to the eighth embodiment comprises two holding sections 56. The first one is located in the lower winding portion 28 (see Figure 9B) while the second one is located in the further winding portion 76 (Figures 9C and 9D). Both the delimitation plate 44 and the separation plate 78 are provided with a chamfering 58.

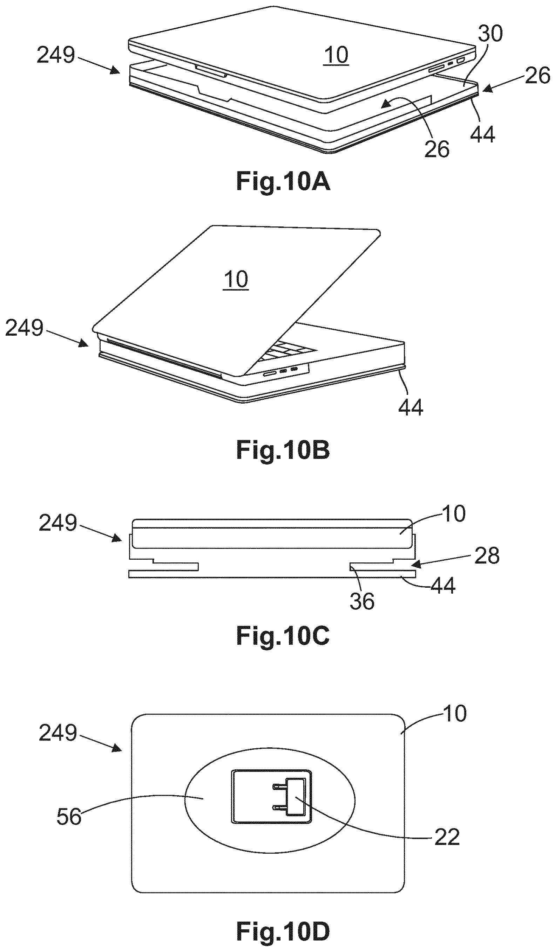

Figures 10A to 10D show a nineth embodiment of the casing 249 which is adapted for receiving tablet (Figure 10A) or a notebook (Figure 10B). Thus, the casing 249 according to the nineth embodiment is considerably larger than the casings of the other embodiments. The basic construction, however, is the same. In this respect, reference is exemplarily made to Figures 6 and 7. In Figure 10D one can see that the casing 249 of the nineth embodiment also comprises a holding section 56 that is arranged on the free surface of the delimitation plate 44 and made to receive a second plug 22 of the respective electronic device 10. It should be noted that in some cases notebooks are provided with a protective cover. The casings 241 to 249 may also be designed such that they are connectable to the protective cover rather than directly with the electronic device.

### Reference list

- 10: electronic device
- 12: charger
- 14: housing
- 16: socket
- 18: first plug
- 20: cable
- 22: second plug
- 241 - 249: casing
- 26: receiving portion
- 28: winding portion
- 30: ground plate
- 32: first surface
- 34: second surface
- 36: protrusion
- 38: thread
- 40: lateral extension
- 42: screws
- 44: delimitation plate
- 46: side wall
- 48: fastening section
- 50: projection
- 52: cut-out
- 54: indentation
- 56: holding section
- 58: chamfering
- 60: pattern
- 62: recess
- 64: front face
- 66: adapting piece
- 68: through-hole
- 70: lateral face
- 72: elongate body
- 74: guiding surface
- 76: further winding portion
- 78: separation plate
- 80: passageway

## Claims

1. Casing (241, 242, 243, 244, 245, 246, 247, 248, 249) of or for an electronic device (10), the electronic device (10) comprising one or more cables (20) or being connectable hereto, wherein the casing (241, 242, 243, 244, 245, 246, 247, 248, 249) forms
- a receiving portion (26) for receiving the electronic device (10), and
- a winding portion (28) for winding up the cable (20).

2. Casing (241, 242, 243, 244, 245, 246, 247, 248, 249) according to claim 1,
**characterized in that** the casing (241, 242, 243, 244, 245, 246, 247, 248, 249) comprises a ground plate (30) having a first surface (32) and a second surface (34), wherein the first surface (32) delimits the receiving portion (26) and the second surface (34) delimits the winding portion (28).

3. Casing (241, 242, 243, 244, 245, 246, 247, 248, 249) according to claim 2,
**characterized in that** the winding portion (28) comprises at least one protrusion (36) that starts from the second surface (34) and around which the cable (20) can be wound.

4. Casing (241, 242, 243, 244, 245, 246, 247, 248, 249) according to claim 3,
**characterized in that** the protrusion (36) comprises a first end and a second end, wherein the first end is connected to the ground plate (30) and at the second end the protrusion (36) comprises one or more lateral extensions (40), the lateral extension (40) and the ground plate (30) delimiting a receiving space of the winding portion (28).

5. Casing (241, 242, 243, 244, 245, 246, 247, 248, 249) according to claim 4,
**characterized in that** the free ends of the lateral extensions (40) coincide with the free ends of the ground plate (30) .

6. Casing (241, 242, 243, 244, 245, 246, 247, 248, 249) according to one of the claims 4 or 5,
**characterized in that** the lateral extensions (40) are formed by a delimitation plate (44) that is fastened to the protrusion (36).

7. Casing (241, 242, 243, 244, 245, 246, 247, 248, 249) according to one of the claims 4 to 8,
**characterized in that** an indentation (54) is formed on the second surface (34) of the ground plate (30) oriented towards the protrusions (36).

8. Casing (241, 242, 243, 244, 245, 246, 247, 248, 249) according to one of the claims 4 to 9,
**characterized in that** the protrusion (36) is formed by an elongate body (72) having at least one curved guiding surface (74) for guiding the cable (20) upon winding.

9. Casing (241, 242, 243, 244, 245, 246, 247, 248, 249) according to one of the preceding claims,
**characterized in that** the casing (241, 242, 243, 244, 245, 246, 247, 248, 249)comprises at least one holding section (56) for releasably fixing the end of the cable (20) to the casing (241, 242, 243, 244, 245, 246, 247, 248, 249).

10. Casing (241, 242, 243, 244, 245, 246, 247, 248, 249) according to claim 9,
**characterized in that** the holding section (56) comprises a recess or a protrusion
- of the delimitation plate (44) and/or
- of the ground plate (30).

11. Casing (241, 242, 243, 244, 245, 246, 247, 248, 249) according to one of the preceding claims,
**characterized in that** the casing (241, 242, 243, 244, 245, 246, 247, 248, 249) comprises at least one further winding portion (76).

12. Casing (241, 242, 243, 244, 245, 246, 247, 248, 249) according to one of the preceding claims,
**characterized in that** the receiving portion (26) comprises
- side walls (46) emerging from the first surface (32) of the ground plate (30) for delimiting the receiving portion (26) and/or
- fastening sections (48) for fixing the electronic device (10) in the receiving portion (26).

13. Casing (241, 242, 243, 244, 245, 246, 247, 248, 249) according to one of the preceding claims or to claim 12, **characterized in that** the ground plate (30) and/or the side walls (46) and/or the fastening sections (48) comprise cut-outs (52) for guiding the cable (20).

14. Casing (241, 242, 243, 244, 245, 246, 247, 248, 249) according to one of the claims 1 or 2,
**characterized in that** the winding portion (28) is formed by recesses of the casing (241, 242, 243, 244, 245, 246, 247, 248, 249).

15. Casing (241, 242, 243, 244, 245, 246, 247, 248, 249) according to one of the preceding claims,
**characterized in that** the casing (241, 242, 243, 244, 245, 246, 247, 248, 249) comprises one or more adapting pieces (66) for fixing the electronic device (10) inside the receiving portion (26) ((different sizes, may interact with the fastening sections (48))).

## Amended claims

### Amended claims in accordance with Rule 137(2) EPC.

1. Casing (241, 242, 243, 244, 245, 246, 247, 248, 249) for an electronic device (10), the electronic device (10) comprising one or more cables (20) or being connectable hereto, wherein the casing (241, 242, 243, 244, 245, 246, 247, 248, 249) forms
- a receiving portion (26) for receiving the electronic device (10), and
- a winding portion (28) for winding up the cable (20), wherein
- the casing (241, 242, 243, 244, 245, 246, 247, 248, 249) comprises a ground plate (30) having a first surface (32) and a second surface (34), wherein the first surface (32) delimits the receiving portion (26) and the second surface (34) delimits the winding portion (28), and
- the winding portion comprises at least one protrusion (36) that starts from the second surface (34) and around which the cable (20) can be wound,
**characterized in that** an indentation (54) is formed on the second surface (34) of the ground plate (30) oriented towards the protrusions (36).

2. Casing (241, 242, 243, 244, 245, 246, 247, 248, 249) according to one of the claims 1 or 2,
**characterized in that** the protrusion (36) comprises a first end and a second end, wherein the first end is connected to the ground plate (30) and at the second end the protrusion (36) comprises one or more lateral extensions (40), the lateral extension (40) and the ground plate (30) delimiting a receiving space of the winding portion (28).

3. Casing (241, 242, 243, 244, 245, 246, 247, 248, 249) according to claim 3,
**characterized in that** the free ends of the lateral extensions (40) coincide with the free ends of the ground plate (30).

4. Casing (241, 242, 243, 244, 245, 246, 247, 248, 249) according to one of the claims 3 or 4,
**characterized in that** the lateral extensions (40) are formed by a delimitation plate (44) that is fastened to the protrusion (36).

5. Casing (241, 242, 243, 244, 245, 246, 247, 248, 249) according to one of the claims 3 to 5,
**characterized in that** the protrusion (36) is formed by an elongate body (72) having at least one curved guiding surface (74) for guiding the cable (20) upon winding.

6. Casing (241, 242, 243, 244, 245, 246, 247, 248, 249) according to one of the preceding claims,
**characterized in that** the casing (241, 242, 243, 244, 245, 246, 247, 248, 249) comprises at least one holding section (56) for releasably fixing the end of the cable (20) to the casing (241, 242, 243, 244, 245, 246, 247, 248, 249).

7. Casing (241, 242, 243, 244, 245, 246, 247, 248, 249) according to claim 7,
**characterized in that** the holding section (56) comprises a recess or a protrusion
- of the delimitation plate (44) and/or
- of the ground plate (30).

8. Casing (241, 242, 243, 244, 245, 246, 247, 248, 249) according to one of the preceding claims,
**characterized in that** the casing (241, 242, 243, 244, 245, 246, 247, 248, 249) comprises at least one further winding portion (76).

9. Casing (241, 242, 243, 244, 245, 246, 247, 248, 249) according to one of the preceding claims,
**characterized in that** the receiving portion (26) comprises
- side walls (46) emerging from the first surface (32) of the ground plate (30) for delimiting the receiving portion (26) and/or
- fastening sections (48) for fixing the electronic device (10) in the receiving portion (26).

10. Casing (241, 242, 243, 244, 245, 246, 247, 248, 249) according to one of the preceding claims or to claim 10,
**characterized in that** the ground plate (30) and/or the side walls (46) and/or the fastening sections (48) comprise cutouts (52) for guiding the cable (20).

11. Casing (241, 242, 243, 244, 245, 246, 247, 248, 249) according to one of the preceding claims,
**characterized in that** the casing (241, 242, 243, 244, 245, 246, 247, 248, 249) comprises one or more adapting pieces (66) for fixing the electronic device (10) inside the receiving portion (26).
